# EUROPÄISCHE PATENTANMELDUNG

(11) **EP 2 949 194 A1**
(43) Veröffentlichungstag der Anmeldung: **02.12.2015**
(21) Anmeldenummer: 15401044.1
(22) Anmeldetag: 06.05.2015
(51) Int. Cl.: A01B 79/00, A01C 7/10, A01C 21/00

(54) **SÄMASCHINE ZUR SAATGUTABLAGE AUF EINEM SAATBETT MITTELS DRILLSAAT UND/ODER EINZELKORNSAAT**

(30) Priorität: 27.05.2014 DE 102014107464
(71) Anmelder: Amazonen-Werke H. Dreyer GmbH & Co. KG, 49205 Hasbergen (DE)
(72) Erfinder: Fröschle, Heike, 49124 Georgsmarienhütte (DE); Ströbel-Fröschle, Markus, 49124 Georgsmarienhütte (DE)

(57) **Zusammenfassung**

Die Erfindung betrifft eine Sämaschine (1) zur Saatgutablage auf einem Saatbett (2) mittels Drillsaat und/oder Einzelkornsaat umfassend eine Säschar (5) und eine Bildaufnahmeeinrichtung (10).

## Beschreibung

Die Erfindung betrifft eine Sämaschine zur Saatgutablage auf einem Saatbett mittels Drillsaat und/oder Einzelkornsaat umfassend eine Säschar.

Solche Sämaschinen sind aus dem Stand der Technik bekannt. Mittels einer Säschar wird eine Särinne in das Saatbett gezogen und Saatgutkörner werden einzeln abgegeben, so dass sie idealerweise in der Särinne in einem vorgegebenen Abstand zum Liegen kommen. Drillsaat und Einzelkornsaat werden vor allem eingesetzt, um eine genaue und gleichmäßige Ablage des Saatgutes und dadurch einen gleichmäßigen Feldaufgang zu erreichen.

Es besteht jedoch das Problem, dass die Ablagequalität, d.h. Gleichmäßigkeit des Abstandes der Körner, stark schwanken kann, beispielsweise wenn der Saatgutkornfluss nicht gleichmäßig ist.

Die DE 10 2011 010 100 schlägt daher vor, den Saatgutkornfluss innerhalb eines Fallrohrs zu detektieren, um die Dosier- und Ablagegenauigkeit zu erhöhen.

Es gibt jedoch zusätzliche Probleme, die zu einer unzureichenden Ablagequalität führen können, beispielsweise bei zu hoher Fahrgeschwindigkeit der Sämaschine, weil die Saatgutkörner nachdem sie mittels der Säschar auf dem Saatbett abgelegt wurden, je nach Fahrgeschwindigkeit in unterschiedlichem Maß verrollen und somit nicht in der Sollposition liegen bleiben.

Es ist daher Aufgabe der Erfindung, die Ablagequalität einer Einzelkornsämaschine zu verbessern.

Die Aufgabe wird bei der Sämaschine der eingangs genannten Art erfindungsgemäß dadurch gelöst, dass die Sämaschine eine Bildaufnahmeeinrichtung umfasst, die derart angeordnet ist, dass sie einen Bereich des Saatbetts (die AOI, area of interest), in dem erwartungsgemäß ein abgegebenes Saatgutkorn zum Liegen kommen wird und der sich in Fahrtrichtung zumindest teilweise hinter der Säschar befindet, abbildet.

Anhand von durch die Bildaufnahmeeinrichtung aufgenommenen Bildern kann bestimmt werden, ob, und wenn ja wo, die Saatgutkörner in der AOI zum Liegen kommen und wohin und wie weit die Körner verrollt sind. Es kann also die Ablagequalität überwacht werden.

Das Abbilden der AOI kann ein Abbilden sein, das ermöglicht, dass die AOI ausreichend scharf und mit ausreichend hoher Auflösung aufgenommen wird, um ein Bildverarbeitungsverfahren durchzuführen.

Die AOI ist ein Bereich, der auch als Verrollbereich bezeichnet werden kann. Sie kann alternativ oder zusätzlich die Sollposition des Saatgutkorns umfassen. Die AOI kann sich in Fahrtrichtung teilweise, im Wesentlichen oder vollständig hinter der Säschar befinden. Die AOI kann insbesondere einen Bereich unmittelbar hinter der Säschar umfassen. Die AOI kann neben der Sollposition eines abgelegten Saatgutkorns die Sollposition des unmittelbar zuvor abgelegten Saatgutkorns umfassen.

Die AOI kann empirisch anhand typischer Werte für die Verrolllänge und/oder Verrollrichtung der Saatgutkörner festgelegt werden. Die AOI kann alternativ oder zusätzlich basierend auf Modellen über die die Verrolllänge und/oder Verrollrichtung festgelegt werden. Beispielsweise können Verrolllänge und Verrollrichtung je nach Maschinentyp, Art des Saatgutes, Fahrgeschwindigkeit, Tiefe der Säschar o.Ä. unterschiedlich sein.

Die Sollposition kann beispielsweise relativ zur Särinne, Säschar und/oder von einem unmittelbar zuvor abgelegten Saatgutkorn definiert werden. Insbesondere kann die Sollposition eine Position in Fahrtrichtung hinter der Säschar und im Wesentlichen in der Särinne sein.

Die Sämaschine kann mehrere Bildaufnahmeeinrichtungen umfassen, die insbesondere derart angeordnet sein können, dass sie aus verschiedenen Richtungen und/oder mit verschiedenen Neigungswinkeln auf das Saatbett gerichtet sind. Dies ermöglicht eine genauere Bestimmung der Ablageposition und gegebenenfalls das Abbilden eines größeren Bereichs des Saatbetts. Die Bildaufnahmeeinrichtungen können gleichzeitig oder zeitversetzt zueinander Bilder aufnehmen. Jede der Bildaufnahmeeinrichtungen kann die im Folgenden beschriebenen Merkmale aufweisen.

Die Bildaufnahmeeinrichtung kann in Fahrtrichtung vor oder hinter der Säschar, insbesondere schräg oberhalb der Säschar, oder senkrecht über der Säschar angeordnet sein. Die Bildaufnahmeeinrichtung kann in Fahrtrichtung hinter der Säschar und im Wesentlichen auf einer Höhe mit der Säschar angeordnet sein. Die Bildaufnahmeeinrichtung kann alternativ oder zusätzlich in einer Richtung senkrecht zur Fahrtrichtung bezüglich der Säschar versetzt angeordnet sein, insbesondere vor, neben oder hinter der Säschar und im Wesentlichen auf einer Höhe mit oder oberhalb der Säschar.

Die Bildaufnahmeeinrichtung kann beispielsweise an einem Gestänge oder an oder in einem Gehäuse der Sämaschine angeordnet sein. Insbesondere kann sie zerstörungsfrei lösbar mit einem Gestänge oder einem Gehäuse der Sämaschine verbunden sein. Die Bildaufnahmeeinrichtung kann bewegbar, insbesondere schwenkbar oder verschiebbar, an einem Gestänge oder Gehäuse der Sämaschine befestigt sein, insbesondere in Fahrtrichtung schwenkbar oder verschiebbar. Die Sämaschine kann einen Antrieb vorsehen, der die Bildaufnahmeeinrichtung, der so ausgebildet ist, dass er die Bildaufnahmeeinrichtung automatisch bewegen kann.

Die Bildaufnahmeeinrichtung kann derart ausgebildet sein und in einem Abstand und mit einem Neigungswinkel in Bezug auf das Saatbett derart angeordnet sein, dass sie mindestens die gesamte AOI abbilden kann. Insbesondere kann die Bildaufnahmeeinrichtung derart ausgebildet sein, dass sie bei Fortbewegung der Sämaschine zeitlich versetzt Bilder aufnehmen kann, von denen mindestens eines, bevorzugt mehrere, insbesondere alle, zumindest die gesamte AOI abbilden. Wenn der Abstand und/oder der Neigungswinkel von bzw. zum Saatbett vorgegeben sind, kann für die Bildaufnahmeeinrichtung ein Mindestwert für den Öffnungswinkel bestimmt werden. Wenn der Öffnungswinkel der Bildaufnahmeeinrichtung vorgegeben ist, kann der Abstand und/oder der Neigungswinkel von bzw. zum Saatbett entsprechend angepasst werden. Der Neigungswinkel der Bildaufnahmeeinrichtung kann beispielsweise durch die Neigung der Fläche eines Bildsensors relativ zum Saatbett oder relativ zum Gehäuse oder dem Gestänge, an dem die Bildaufnahmeeinrichtung befestigt ist, beschrieben werden. Es sei angemerkt, dass ein Saatbett typischerweise nicht eben ist. Daher kann näherungsweise ein Neigungswinkel zu einer Ebene durch die Punkte, an denen die Säschar auf dem Saatbett aufliegt, verwendet werden.

Insbesondere kann die Bildaufnahmeeinrichtung mit einem Öffnungswinkel ß, typischerweise kleiner oder gleich 180°, in einen Neigungswinkel bezogen auf das das Saatbett von größer oder gleich 0° und kleiner als (90° + ß/2. Insbesondere kann der Neigungswinkel größer oder gleich 0° und kleiner oder gleich (90° - ß/2) sein. Der Neigungswinkel kann größer oder gleich 0° und kleiner oder gleich ß/2 sein. Ein Neigungswinkel von 0° bedeutet dabei, dass die Sensorfläche der Bildaufnahmeeinrichtung im Wesentlichen parallel zum Saatbett liegt. Dabei gibt es kaum Abweichungen zwischen gemessenen und tatsächlichen Abständen und die Schärfentiefe der Bildaufnahmeeinrichtung kann niedrig sein. Wenn der Neigungswinkel größer wird, kann ein größerer Bereich des Saatbetts abgebildet werden, die Schärfentiefe muss jedoch höher gewählt werden und die gemessenen Abstände müssen in tatsächliche Abstände umgerechnet werden. Optional kann in der Bildaufnahmeeinrichtung oder zusätzlich zu der Bildaufnahmeeinrichtung eine Leuchteinrichtung vorgesehen, die mindestens die gesamte AOI, insbesondere aber den gesamten Bereich, den die Bildaufnahmeeinrichtung abbildet, beleuchtet.

Die Sämaschine kann ein Schutzelement für die Bildaufnahmeeinrichtung umfassen, beispielsweise ein Gehäuse oder eine Schutzscheibe die zwischen der Optik der Bildaufnahmeeinrichtung und dem Saatbett angeordnet ist. So kann Beschädigung und Verschmutzung vermieden werden.

Die Bildaufnahmeeinrichtung kann derart ausgebildet sein, dass sie mindestens ein Bild von der AOI aufnimmt, vorzugsweise jedoch zwei oder mehr zeitversetzt aufgenommene Bilder. Sie kann beispielsweise eine Fotokamera sein, die insbesondere zur, insbesondere automatischen, Aufnahme von Serienbildern geeignet sein kann, oder eine Filmkamera. Insbesondere können die Fotokamera bzw. die Filmkamera Digitalkameras sein.

Bei der Aufnahme genau eines Bildes kann die Ablageposition unter Berücksichtigung einer Zeitspanne bestimmt werden, innerhalb derer zu erwarten ist, dass das Saatgutkorn zum Liegen kommt. Diese Annahme kann unter Umständen nicht exakt zutreffen sein und so zu Ungenauigkeiten führen, dafür ist die Datenmenge gering.

Die Sämaschine kann eine Einrichtung umfassen, die die Saatgutkörner andrückt und/oder mit Erde bedeckt, nachdem sie auf das Saatbett abgelegt wurden. In diesem Fall kann die Bildaufnahmeeinrichtung derart ausgebildet sein, dass sie genau ein Bild von der AOI aufnimmt unmittelbar bevor das Saatgutkorn angedrückt oder bedeckt wird. Dadurch müssen keine Annahmen getroffen werden, nach welcher Zeitspanne das Saatgutkorn zum Liegen kommt, da das Andrücken oder Bedecken die Position des Saatgutkorns fixiert. So kann eine höhere Genauigkeit bei geringer Datenmenge erreicht werden.

Alternativ kann eine Serie von zeitversetzt aufgenommen Bildern der AOI aufgenommen werden. Insbesondere kann die Bildaufnahmeeinrichtung eine Videokamera sein, die beispielsweise während der gesamten Saatgutablage oder über den gesamten Zeitraum zwischen dem Ablegen des Saatgutkorns und dem Andrücken des Saatgutkorns die jeweilige AOI aufzeichnet. Je mehr zeitversetzte Aufnahmen der AOI gemacht werden, desto genauer kann bestimmt werden, ob das Saatgutkorn tatsächlich zum Liegen gekommen ist. Dafür wächst hier die Datenmenge an.

Die Sämaschine kann außerdem einen Auslöser umfassen, der derart ausgebildet ist, dass er das Aufnehmen eines Bildes oder mehrerer Bilder mittels der Bildaufnahmeeinrichtung sofort oder zeitverzögert auslöst. Insbesondere kann die Sämaschine eine Lichtschranke umfassen, die detektiert, wenn ein Saatgutkorn die Lichtschranke passiert. Beispielsweise kann diese Lichtschranke entlang des Wegs angeordnet sein, den das Saatgutkorn nach der Vereinzelung zum Saatbett zurücklegt.

Alternativ oder zusätzlich kann die Sämaschine einen Wegstreckenmesser umfassen. Dieser Wegstreckenmesser kann derart ausgebildet sein, dass er basierend auf der von der Sämaschine zurückgelegten Fahrtstrecke die Bildaufnahme auslöst. Weiterhin kann die Sämaschine einen Auslöser umfassen, der derart ausgebildet ist, dass er basierend auf einem Taktsignal die Bildaufnahme auslöst. Ein solches Taktsignal kann beispielsweise im Voraus festgelegt werden. Alternativ kann das Taktsignal an die Fahrgeschwindigkeit gekoppelt sein, wobei bei gleichbleibenden zu erzielenden Abständen zwischen den Ablagepositionen die Frequenz des Taktsignals mit zunehmender Fahrgeschwindigkeit zunimmt.

Die Sämaschine kann außerdem eine Datenverarbeitungseinrichtung umfassen, die mittels einer Datenverbindung mit der Bildaufnahmeeinrichtung verbunden ist. Die Datenverarbeitungseinrichtung kann derart ausgebildet sein, dass sie unter Berücksichtigung des Bildes bzw. der Bilder Daten erzeugt, die die Ablageposition des Saatgutkorns und/oder eine Abweichung der Ablageposition des Saatgutkorns von einer Sollposition umfassen.

Die Sämaschine kann des Weiteren eine Speichereinrichtung umfassen, die mittels einer Datenverbindung mit der Bildaufnahmeeinrichtung und/oder mit der Datenverarbeitungseinrichtung verbunden ist und die derart ausgebildet ist, dass sie das Bild bzw. die Bilder und/oder mindestens einen Teil der Daten speichert. So können später die Saatgutverteilung und mögliche Faktoren, die die Saatgutverteilung negativ beeinflussen, nachvollzogen werden.

Die Speichereinrichtung und/oder die Datenverarbeitungseinrichtung und/oder die Bildaufnahmeeinrichtung können separat vorliegen oder in einem gemeinsamen Gehäuse untergebracht sein und/oder eine Einheit bilden.

Die Datenverarbeitungseinrichtung und/oder die Speichereinrichtung können jeweils an dem Maschinengehäuse und/oder einem Gestänge der Sämaschine angebracht, insbesondere zerstörungsfrei lösbar daran befestigt, sein oder im Inneren der Sämaschine verbaut sein oder von dem Teil der Sämaschine, der zur Saatgutablage verwendet wird, beabstandet angeordnet sein.

Die Sämaschine kann des Weiteren eine Ausgabeeinrichtung umfassen, die mittels einer Datenverbindung mit der Bildaufnahmeeinrichtung und/oder mit der Datenverarbeitungseinrichtung verbunden ist. Die Ausgabeeinrichtung kann derart ausgebildet sein, dass sie das Bild direkt und/oder eine Visualisierung mindestens eines Teils der Daten und/oder ein Signal ausgibt, das basierend auf mindestens einem Teil der Daten erzeugt wird.

Die Ausgabeeinrichtung kann beispielsweise einen Monitor, eine Leuchte, eine Audioausgabeeinrichtung oder eine sensorische Ausgabeeinrichtung, beispielsweise ein Vibrationselement umfassen.

Die Ausgabeeinrichtung kann im Führerhaus der Sämaschine angeordnet sein, sofern diese selbstfahrend ist. Alternativ kann die Ausgabeeinrichtung im Führerhaus einer Zugmaschine für die Sämaschine angeordnet sein. Es ist ebenfalls möglich, dass alternativ oder zusätzlich zu der Ausgabeeinrichtung im Führerhaus der Sämaschine bzw. Zugmaschine eine Ausgabeeinrichtung, die von dem zur Saatgutablage verwendeten Teil der Sämaschine beabstandet angeordnet ist.

Die obengenannten Datenverbindungen können jeweils drahtlos oder drahtgebunden vorliegen. Insbesondere sind gängige Übertragungsmittel wie Infrarot, Ultraschall, Bluetooth oder dergleichen Technologien möglich.

Die Sämaschine kann einen GPS Empfänger und/oder Sender umfassen.

Die im Zusammenhang mit der Vorrichtung beschriebenen Merkmale können mit den im Folgenden beschriebenen Verfahrensmerkmalen beliebig kombiniert werden und werden im Folgenden nicht explizit wiederholt. Die im Zusammenhang mit der Vorrichtung beschriebenen Vorteile werden im Zusammenhang mit den entsprechenden Verfahrensmerkmalen nicht wiederholt.

Das erfindungsgemäße Verfahren zur Saatgutablage auf ein Saatbett mittels Drillsaat und/oder Einzelkornsaat umfasst das Abbilden eines Bereichs des Saatbetts (der AOI, area of interest), in dem erwartungsgemäß ein abgegebenes Saatgutkorn zum Liegen kommen wird und der sich in Fahrtrichtung zumindest teilweise hinter der Säschar befindet, mittels einer Bildaufnahmeeinrichtung.

Das Verfahren umfasst das Aufnehmen mindestens eines Bildes von der AOI, vorzugsweise jedoch das Aufnehmen mindestens zweier zeitversetzt aufgenommener Bilder der AOI.

Die Bilder können mittels einer bewegbaren, insbesondere verschiebbaren und/oder schwenkbaren, Bildaufnahmeeinrichtung aufgenommen werden und das Verfahren kann umfassen, dass die Bildaufnahmeeinrichtung, vorzugsweise automatisch, entsprechend der Fahrgeschwindigkeit derart verschoben und/oder geschwenkt wird, dass auf zeitlich aufeinanderfolgenden Bildern der gleiche oder im Wesentlichen der gleich Bereich abgebildet wird, zumindest aber die gesamte AOI.

Das Aufnehmen des Bildes kann bei Detektion eines Saatgutkorns, beispielsweise beim Passieren einer Lichtschranke, und/oder basierend auf einer zurückgelegten Wegstrecke und/oder durch ein Taktsignal ausgelöst werden.

Das Verfahren kann des Weiteren ein Bestimmen der Ablageposition des Saatgutkorns unter Berücksichtigung des aufgenommenen Bildes bzw. der aufgenommenen Bilder umfassen.

Zeitgleich mit dem Aufnehmen des Bildes können GPS-Koordination erfasst werden und das Bestimmen der Ablageposition des Saatgutkorns kann unter Berücksichtigung des Bilds bzw. der Bilder und der GPS-Koordinaten erfolgen. Insbesondere kann die Ablagequalität für verschiedene Bereiche des Saatbetts bezogen auf die GPS Koordinaten bestimmt werden.

Das Verfahren kann weiterhin das Erzeugen von Daten umfassen, insbesondere das Erzeugen von Daten umfassend die Ablageposition des Saatgutkorns und/oder eine Abweichung der Ablageposition des Saatgutkorns von einer Sollposition.

Das Bestimmen der Ablageposition kann ein Bildverarbeitungsverfahren, insbesondere ein Kantenerkennungsverfahren und/oder eine Farbklassifikation und/oder eine Kontrastanalyse, zum Identifizieren eines Saatgutkorns und/oder einer Särinne und/oder zum Bestimmen der Position des Saatgutkorns auf dem Bild und/oder zum Bestimmen des Abstands zwischen dem Saatgutkorn und einer Särinne auf dem Bild und/oder einem anderem Bildelement ausgebildet sein.

Wird auf dem Bild sowohl die Särinne als auch das Saatgutkorn identifiziert, kann ein Verrollen in einer Richtung, die nicht der Fahrtrichtung entspricht, basierend auf einem Abstand zwischen der Särinne und dem Saatgutkorn, bestimmt werden. Außerdem kann bei einer Serie von aufeinanderfolgenden Bildern, basierend auf der jeweiligen Position der Särinne auf den aufeinanderfolgenden Bildern, bestimmt werden, ob eine Bewegung der Bildaufnahmeeinrichtung relativ zur Särinne in einer Richtung, die nicht der Fahrtrichtung entspricht, stattgefunden hat. Dann kann die gemessene Position des Saatgutkorns entsprechend korrigiert werden.

Bei der Bestimmung der Ablageposition mittels mehrerer Bilder ist zu berücksichtigen, dass das Saatgutkorn nicht nur relativ zum Boden verrollt sondern typischerweise auch die Bildaufnahmeeinrichtung relativ zum Boden in Fahrtrichtung bewegt wird. Basierend auf der Fahrgeschwindigkeit oder mittels eines Wegstreckenmessers kann bestimmt werden, wie weit sich die gemessene Sollposition des Saatgutkorns alleine aufgrund der sich in Fahrtrichtung bewegenden Bildaufnahmeeinrichtung in dem Intervall zwischen der Aufnahme der einzelnen Bilder verschiebt. Diese Verschiebung kann dann von der gemessenen Änderung der Position bezogen auf das vorhergehende Bild in bzw. gegen die Fahrtrichtung subtrahiert werden.

Desweiteren kann bei der Bestimmung der Ablageposition der Neigungswinkel der Bildaufnahmeeinrichtung relativ zum Saatbett berücksichtigt werden. So wird vermieden, dass aufgrund der Neigung der Bildaufnahmeeinrichtung verfälschte Abstände bestimmt werden.

Das Verfahren kann eine Bestimmung der Relativposition des abgelegten Saatgutkorns im Vergleich zur Ablageposition des unmittelbar zuvor abgelegten Saatgutkorns umfassen. Insbesondere kann die AOI derart gewählt werden, dass sie die Sollposition des abgelegten Saatgutkorns und die tatsächliche und/oder Sollposition des unmittelbar zuvor abgelegten Saatgutkorns umfasst.

Das Verfahren kann ein Übertragen des Bildes bzw. der Bilder und/oder mindestens eines Teils der Daten kann von einer Datenverarbeitungseinrichtung an eine Ausgabeeinrichtung und/oder eine Speichereinrichtung umfassen.

Das Verfahren kann das Ausgeben des Bilds bzw. der Bilder und/oder eine Visualisierung mindestens eines Teils der Daten und/oder ein Signal, das basierend auf mindestens einem Teil der Daten erzeugt wird, umfassen.

Das Verfahren kann einen Vergleich der Abweichung der Ablageposition des Saatgutkorns von einer Sollposition mit einem vorgegebenen Wert umfassen. Alternativ oder zusätzlich kann es einen Vergleich der Abweichung des Abstands zwischen der Ablageposition des Saatgutkorns von der Ablageposition des unmittelbar zuvor abgelegten Saatgutkorns mit einem vorgegebenen Wert umfassen. Wenn die jeweilige Abweichung größer ist als der vorgegebene Wert, kann ein Warnsignal erzeugt und ausgegeben werden.

Dies ermöglicht, dass der Betreiber einer Sämaschine direkt darauf reagieren kann, wenn die Ablagequalität nicht stimmt. Es kann bestimmt werden, ob die Parameter bei der Saatgutablage, beispielsweise der Saatgutstrom oder die Fahrgeschwindigkeit angepasst oder Maschinenteile überprüft werden müssen.

Die Merkmale und Vorteile der Erfindung werden nachfolgend anhand der Figuren weiter erläutert. Dabei zeigt
- Figur 1: eine schematische, nicht maßstabsgetreue Seitenansicht einer Sämaschine zur Saatgutablage und
- Figur 2: eine schematische Darstellung einer beispielhaften räumlichen Anordnung einer Bildaufnahmeeinrichtung bezogen auf das Saatbett, die AOI und die Särinne.

Die Figur zeigt eine schematische, nicht maßstabsgetreue Darstellung des Säscharbereiches einer Einzelkornsämaschine 1. Das Saatbett ist hier mit dem Bezugszeichen 2 gekennzeichnet. Die AOI (area of interest) mit dem Bezugszeichen 3. Sie ist ein Bereich des Saatbetts, in dem erwartungsgemäß ein abgegebenes Saatgutkorn zum Liegen kommen wird und der sich hier in Fahrtrichtung vollständig hinter der Säschar befindet. Die AOI kann sich alternativ in Fahrtrichtung nur teilweise hinter der Säschar befinden. Beispielhaft ist die AOI (bzw. ihre Projektion auf das Saatbett) rechteckig. Alternativ kann sie auch kreisförmig, oval o.Ä. sein.

Die Sämaschine ist hier in Form einer Anbaumaschine ausgebildet, der durch eine hier nicht gezeigte Zugmaschine gezogen werden kann. Alternativ kann die Sämaschine auch selbstfahrend sein. Die Sämaschine umfasst ein Gestänge 4 und eine Säschar 5, die hier jedoch repräsentativ für eine Reihe von Säscharen dargestellt ist, die quer zur Fahrtrichtung (mit dem Pfeil 6 gekennzeichnet) angebracht sind. Die Säschar ist zum Ziehen einer Särinne 7 in das Saatbett und zum sukzessiven Abgeben einzelner Saatgutkörner 8 auf das Saatbett angeordnet und ausgebildet. In Fahrtrichtung hinter der Säschar befindet sich die AOI. Zusätzlich dazu ist in Fahrtrichtung hinter der Säschar und hinter der Kamera eine Abfangrolle 9 angeordnet, die die Saatgutkörner andrückt oder mit Erde bedeckt. Diese ist optional und kann je nach Bedarf weggelassen werden.

Die Bildaufnahmeeinrichtung ist hier eine digitale Fotokamera 10 mit einem Öffnungswinkel β, die in diesem Fall an dem Gestänge befestigt und oberhalb der Säschar mit einem Neigungswinkel α bezogen auf das Saatbett angeordnet ist, die also nicht senkrecht sondern schräg auf das Saatbett gerichtet ist. Die Kamera 10 ist derart angeordnet, dass sie die gesamte AOI und in diesem Fall noch einen größeren Bereich des Saatbetts als die AOI 3 abbildet. Es kann jedoch auch eine Filmkamera oder eine Kombination aus Film- und Fotokamera verwendet werden. Die Kamera kann bezogen auf die Fahrtrichtung direkt über, vor oder hinter der Säschar angeordnet sein, je nachdem, wie die Säschar aufgebaut ist. Die Kamera kann in Fahrtrichtung hinter der Säschar und niedriger angeordnet sein als die Oberkante der Säschar (also im Wesentlichen auf einer Höhe mit der Säschar). Optional kann ein Beleuchtungselement 11, beispielsweise eine Lampe oder ein Blitz vorgesehen sein.

In der Figur ist ebenfalls eine, in diesem Fall in die Säschar integrierte, Lichtschranke 12 angedeutet, die so angeordnet ist, dass die vereinzelten Saatgutkörner vor dem Auftreffen auf dem Saatbett die Lichtschranke passieren. Die Lichtschranke dient zum Auslösen der Bildaufnahme. Allerdings ist diese optional vorgesehen. Das Auslösen kann alternativ beispielsweise durch einen hier nicht gezeigten Wegstreckenmesser oder ein Element zur Ausgabe eines Taktsignals erfolgen.

In diesem Fall ist an dem Kameragehäuse ein GPS-Empfänger 13 angeordnet. Darauf kann jedoch auch verzichtet werden, beispielsweise, wenn nur eine Relativposition aufeinanderfolgender Saatgutkörner, aber keine absolute Ablageposition bestimmt werden soll.

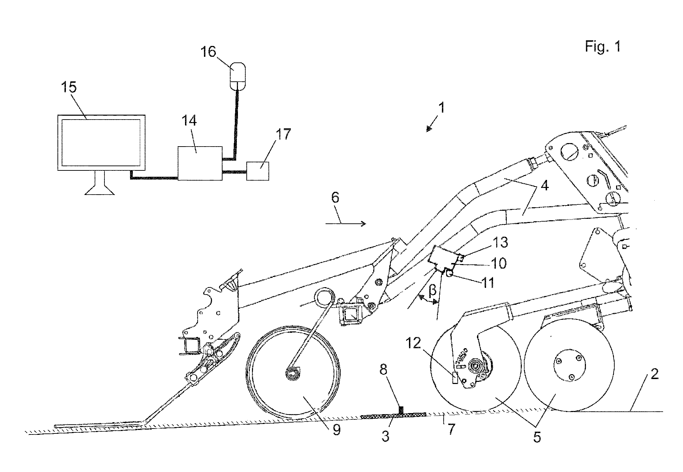

Figur 1 zeigt weiterhin eine Einheit, die eine Datenverarbeitungseinrichtung 14, eine erste Ausgabeeinrichtung 15, hier in Form eines Monitors, eine zweite Ausgabeeinrichtung 16, hier in Form einer Warnleuchte, und eine Speichereinrichtung 17 umfasst. Diese Einheit kann beispielsweise im Führerhaus eines Zugfahrzeugs angebracht werden. Es muss jedoch nicht zwangsläufig eine Datenverarbeitungseinrichtung und eine Ausgabeeinrichtung vorgesehen sein. Die Bilddaten können dann mittels der Speichereinrichtung gespeichert werden, beispielsweise um sie zu einem späteren Zeitpunkt zu verarbeiten. Alternativ kann auf die Speichereinrichtung verzichtet werden. Außerdem kann auf eine Datenverarbeitungseinrichtung verzichtet werden. Die Bilddaten können dann direkt mittels eines Monitors als Ausgabeeinrichtung angezeigt werden ohne verarbeitet zu werden.

Die beiden Ausgabeeinrichtungen, die Speichereinrichtung und die Datenverarbeitungseinrichtung sind beispielsweise drahtgebunden miteinander verbunden. Die Übertragung der Bilddaten von der Kamera zur Speichereinrichtung und/oder Datenverarbeitungseinrichtung und/oder Ausgabeeinrichtung erfolgt drahtlos, in diesem Fall beispielsweise mittels Bluetooth. Es versteht sich, dass jede der genannten Datenverbindungen auch durch eine andere Art von Datenverbindungen ersetzt werden kann, insbesondere kann je nach Bedarf jeweils eine drahtgebundene und drahtlose Datenübertragung erfolgen.

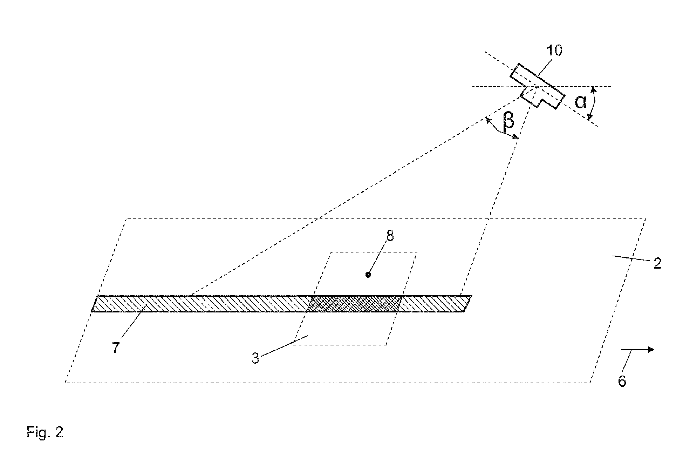

In Figur 2 ist eine Schrägansicht des Saatbetts 2, der AOI 3, der Särinne 7, eines Saatgutkorns 8 und der Kamera 10 mit einem Öffnungswinkel ß und einem Neigungswinkel α bezogen auf das Saatbett dargestellt. Mann kann erkennen, dass ein Bereich des Saatbetts abgebildet werden kann, der größer ist, als die AOI. Bei Fortbewegung der Sämaschine in Fahrtrichtung 6 verschiebt sich die AOI, bleibt aber für eine gewisse zurückgelegte Wegstrecke im abbildbaren Bereich. Wenn der durch den Öffnungswinkel allein gegebene abbildbare Bereich so klein ist, dass die AOI bei Fortbewegung der Saatmaschine ausreichend lange nicht darin bleibt, kann die Kamera gegen Fahrtrichtung verschoben oder geschwenkt werden, sprich, der Neigungswinkel α kann verändert werden.

Im Folgenden wird ein Verfahren zur Saatgutablage beschrieben, das beispielsweise mittels der oben beschriebenen Sämaschine oder einer anders ausgebildeten Sämaschine ausgeführt werden kann.

Um Saatgut auf ein Saatbett abzulegen, bewegt sich eine Sämaschine mit einer bestimmten Geschwindigkeit in Fahrtrichtung entlang eines Saatbetts. Die Säschar zieht dabei eine Särinne in das Saatbett und gibt gleichzeitig einzelne Saatgutkörner auf das Saatbett ab. Wenn ein Saatgutkorn eine Lichtschranke passiert, wird, beispielsweise drahtgebunden, ein Signal an eine Kamera übertragen. Alternativ kann, beispielsweise basierend auf einem vorgegebenen Saatgutstrom ein Taktsignal vorgegeben sein oder basierend auf einem gemessenen Saatgutstrom ein Taktsignal bestimmt werden.

Das Signal bzw. Taktsignal löst automatisch die Aufnahme eines Bildes oder einer Serie von Bildern aus, beispielsweise zwischen zwei und fünf Bildern, beispielsweise in Zeitintervallen, die größer/gleich einer hundertstel Sekunde und kleiner oder gleich zehn Sekunden, insbesondere kleiner als fünf Sekunden, insbesondere kleiner oder gleich einer Sekunde sind. Es kann auch eine Videokamera verwendet werden, die typischerweise 24 Bilder pro Sekunde aufzeichnet. Je mehr Bilder von der AOI aufgenommen werden sollen, desto kürzer werden die Zeitintervalle zwischen den Bildern gewählt. Dadurch wird sichergestellt, dass sich die AOI bei allen Bildern noch im mit der Kamera abbildbaren Bereich befindet.

Optional empfängt ein GPS-Empfänger empfängt GPS-Koordinaten, beispielsweise der Kamera oder der Säschar, zu dem Zeitpunkt, zu dem die Aufnahme jedes Bildes ausgelöst wird. Die aufgenommenen Bilder und die dazugehörigen GPS-Koordinaten werden nun beispielsweise drahtlos an eine Datenverarbeitungseinrichtung und/oder eine Speichereinrichtung gesendet. Die Datenverarbeitungseinrichtung und/oder eine Speichereinrichtung kann zusätzlich Zugriff auf die Fahrgeschwindigkeit der Sämaschine und die Flussgeschwindigkeit des Saatgutkorns oder dergleichen haben.

Um auf dem Bild bzw. den Bildern das Saatgutkorn zu identifizieren, wird ein Bildverarbeitungsverfahren eingesetzt, beispielsweise umfassend ein Kantenerkennungsverfahren und/oder eine Farbklassifikation und/oder eine Kontrastanalyse oder ähnliche gängige Verfahren. Zusätzlich kann auf ähnliche Weise die Särinne identifiziert werden. Das Identifizieren ist optional und kann unter bestimmten Umständen weggelassen werden, beispielsweise wenn nur eine unmittelbare Wiedergabe des Bildes bzw. der Bilder oder ein Speichern der Bilder erwünscht ist.

Bei der Bestimmung der Ablageposition mittels mehrerer Bilder wird, in diesem Fall beispielsweise basierend auf der Fahrgeschwindigkeit oder mittels eines Wegstreckenmessers bestimmt, wie weit sich eine gemessene Position alleine aufgrund der sich in Fahrtrichtung bewegenden Kamera in dem Intervall zwischen der Aufnahme der einzelnen Bilder verschiebt. Diese Verschiebung wird von der gemessenen Änderung der Position des Saatgutkorns bezogen auf das vorhergehende Bild in bzw. gegen die Fahrtrichtung subtrahiert. Außerdem wird für jedes Bild die Änderung der Position des Saatgutkorns in einer Richtung, die nicht der Fahrtrichtung entspricht bestimmt. Falls die Särinne identifiziert wurde geschieht dies basierend auf dem Abstand zur Särinne. So werden mögliche Pendelbewegungen der Kamera nicht als Verrollen interpretiert. Das obige Verfahren ergibt den gemessenen Abstand zur Position im jeweils vorhergehenden Bild, der tatsächlich auf ein Verrollen des Saatgutkorns zurückzuführen ist. Basierend auf dem so erhaltenen gemessenen Abstand und dem Neigungswinkel der Kamera bezogen auf das Saatbett wird dann der tatsächliche Abstand bestimmt. Dieser Schritt entfällt beispielsweise dann, wenn die Kamera im Wesentlichen parallel zum Saatbett angeordnet ist. Wird der so bestimmte Abstand kleiner als ein vorgegebener Wert, bestimmt die Datenverarbeitungsanlage, dass das Saatgutkorn an der Ablageposition zum Liegen gekommen ist. Sofern nötig wird die Kamera automatisch bewegt, beispielsweise gegen die Fahrtrichtung verschoben oder geschwenkt, so dass sie die gesamte AOI abbilden kann.

Es kann der Fall auftreten, dass der besagte Abstand diesen Wert nicht unterschreitet. Dann kann davon ausgegangen werden, dass das Saatgutkorn nach der Aufnahme des letzten Bildes der Bildserie noch weiter verrollt ist. Bei mehreren Bildern kann mittels einer Extrapolation eine geschätzte Ablageposition bestimmt werden. Alternativ kann die Ablageposition auf einen vorgegebenen Wert gesetzt werden, beispielsweise die zuletzt gemessene Position. Außerdem kann das Saatgutkorn auf einem der Bilder einer Serie (außer dem letzten) nicht im Bereich des Bildes liegen, auf anderen hingegen schon. Der oben aufgeführte Abstand kann dann bezogen auf das Bild erfolgen, auf dem das Saatgutkorn zuletzt abgebildet war.

Wird nur ein einziges Bild aufgenommen entfallen die oben genannten Schritte und die Position des Saatgutkorns, die mittels dieses Bilds bestimmt wird, oder eine mit einem Modell basierend auf dem Bild und auf Ablageparametern wie Fahrgeschwindigkeit oder Saatgutstrom errechnete Position, wird als Ablageposition angenommen. Insbesondere kann das Saatgutkorn nach dem Ablegen angedrückt werden. Das Bild wird dann idealerweise unmittelbar vor dem Andrücken aufgenommen, da das Saatgutkorn dann voraussichtlich kaum noch verrollt.

Das Saatgutkorn kann auf einem, insbesondere dem letzten, bzw. auf dem einzigen oder auf mehreren, insbesondere allen, Bildern nicht im Bereich des Bildes liegen. In diesem Fall kann die Ablageposition auf einen vorgegebenen Wert gesetzt werden, beispielsweise eine beliebige vorgegebene Ablageposition außerhalb des Bereichs der AOI oder des Bereichs, den die Kamera abbilden kann.

Es können alternativ oder zusätzlich andere Maßnahmen ergriffen werden, wenn die oben genannten Fälle auftreten, beispielsweise das Ausgeben und/oder Speichern einer entsprechenden Fehlermeldung.

Die so bestimmte Ablageposition kann nun mit einer vorgegebenen Sollposition verglichen werden. Wenn die Abweichung der Ablageposition von der Sollposition einen bestimmten Wert überschreitet, wird mittels der Warnleuchte ein Warnsignal ausgegeben. Außerdem kann auf dem Monitor beispielsweis ein Bild angezeigt werden, auf dem die tatsächliche Ablageposition und die Sollposition dargestellt sind. Alternativ kann dem Fahrer auch ein Live-Bild einer Videokamera angezeigt werden, anhand dessen er ersehen kann, ob die Saatgutkörner stark verrollen oder nicht. Aus den Ablagepositionen und/oder dem Bild bzw. den Bildern direkt und/oder anderen Daten, die aus den gemessenen Werten berechnet werden, kann die Ablagequalität bestimmt werden. Beispielsweise ist die Ablagequalität umso besser, je weniger die Ablageposition von der Sollposition abweicht.

Werden GPS Koordinaten gemessen, kann insbesondere bestimmt werden, in welchen Bereichen des Saatbetts eine höhere oder niedrigere Ablagequalität vorliegt, beispielsweise wenn in diesen Bereichen die Abweichung der Ablageposition von der Sollposition einen bestimmten Wert überschreitet.

Es versteht sich, dass in dem zuvor beschriebenen Ausführungsbeispiel genannte Merkmale nicht auf diese speziellen Kombinationen beschränkt sind und auch in beliebigen anderen Kombinationen möglich sind.

## Patentansprüche

1. Sämaschine (1) zur Saatgutablage auf ein Saatbett (2) mittels Drillsaat und/oder Einzelkornsaat, umfassend eine Säschar (5),
**gekennzeichnet durch**
eine Bildaufnahmeeinrichtung (10), die derart angeordnet ist, dass sie einen Bereich des Saatbetts (die AOI, area of interest), in dem erwartungsgemäß ein abgegebenes Saatgutkorn zum Liegen kommen wird und der sich in Fahrtrichtung zumindest teilweise hinter der Säschar befindet, abbildet.

2. Sämaschine (1) nach Anspruch 1, wobei die Bildaufnahmeeinrichtung (10) derart ausgebildet ist, dass sie mindestens ein Bild von der AOI (3) aufnimmt, vorzugsweise mindestens zwei zeitversetzt aufgenommene Bilder.

3. Sämaschine (1) nach Anspruch 2, des Weiteren umfassend einen Auslöser, der derart ausgebildet ist, dass er das Aufnehmen des Bildes bzw. der Bilder mittels der Bildaufnahmeeinrichtung sofort oder zeitverzögert auslöst, insbesondere eine Lichtschranke (12), die detektieren wenn ein Saatgutkorn (8) die Lichtschranke (12) passiert, und/oder einen Wegstreckenmesser und/oder einen Auslöser, der basierend auf einem Taktsignal die Bildaufnahme auslöst.

4. Sämaschine (1) nach Anspruch 2 oder 3, des Weiteren umfassend eine, insbesondere an dem Maschinengehäuse und/oder einem Gestänge (4) der Sämaschine (1) befestigte und/oder im Inneren der Sämaschine (1) verbaute, Datenverarbeitungseinrichtung (14), die mittels einer Datenverbindung mit der Bildaufnahmeeinrichtung (10) verbunden ist und derart ausgebildet ist, dass sie unter Berücksichtigung des Bildes bzw. der Bilder Daten erzeugt, die die Ablageposition des Saatgutkorns (8) und/oder eine Abweichung der Ablageposition des Saatgutkorns (8) von einer Sollposition umfassen.

5. Sämaschine (1) nach einem der Ansprüche 2 bis 4, des Weiteren umfassend eine, insbesondere an dem Maschinengehäuse und/oder einem Gestänge (4) der Sämaschine (1) befestigte und/oder im Inneren der Sämaschine (1) verbaute, Speichereinrichtung (17), die mittels einer Datenverbindung mit der Bildaufnahmeeinrichtung (10) und/oder mit der Datenverarbeitungseinrichtung (14) verbunden ist und die derart ausgebildet ist, dass sie das Bild bzw. die Bilder und/oder mindestens einen Teil der Daten speichert.

6. Sämaschine (1) nach einem der Ansprüche 2 bis 5, des Weiteren umfassend eine, insbesondere in einem Führerhaus der Sämaschine (1) und/oder in einem Führerhaus einer Zugmaschine für die Sämaschine (1) angeordnete, Ausgabeeinrichtung (15, 16), die mittels einer Datenverbindung mit der Bildaufnahmeeinrichtung (10) und/oder mit der Datenverarbeitungseinrichtung (14) verbunden ist und die derart ausgebildet ist, dass sie das Bild und/oder eine Visualisierung mindestens eines Teils der Daten und/oder ein Signal ausgibt, das basierend auf mindestens einem Teil der Daten erzeugt wird.

7. Verfahren zur Saatgutablage auf ein Saatbett mittels Drillsaat und/oder Einzelkornsaat, umfassend Abbilden eines Bereichs (3) des Saatbetts (der AOI, area of interest), in dem erwartungsgemäß ein abgegebenes Saatgutkorn zum Liegen kommen wird und der sich in Fahrtrichtung zumindest teilweise hinter der Säschar befindet, mittels einer Bildaufnahmeeinrichtung (10).

8. Verfahren nach Anspruch 7, umfassend Aufnehmen mindestens eines Bildes von der AOI (3), vorzugsweise mindestens zweier zeitversetzt aufgenommene Bilder.

9. Verfahren nach einem der Anspruch 8, wobei das Aufnehmen des Bildes bei Detektion eines Saatgutkorns (8), beispielsweise beim Passieren einer Lichtschranke (12), und/oder basierend auf einer zurückgelegten Wegstrecke und/oder durch ein Taktsignal ausgelöst wird.

10. Verfahren nach einem der Ansprüche 8 oder 9, des Weiteren umfassend Bestimmen der Ablageposition des Saatgutkorns (8) unter Berücksichtigung des Bildes bzw. der Bilder, insbesondere umfassend ein Bildverarbeitungsverfahren zum Identifizieren des Saatgutkorns (8) und/oder einer Särinne (7) und/oder zum Bestimmen der Position des Saatgutkorns (8) auf dem Bild und/oder zum Bestimmen des Abstands zwischen dem Saatgutkorn (8) und einer Särinne (7) auf dem Bild.

11. Verfahren nach einem der Ansprüche 7 bis 10, wobei zeitgleich mit dem Aufnehmen des Bildes GPS Koordinaten erfasst werden und das Bestimmen der Ablageposition des Saatgutkorns (8) unter Berücksichtigung der GPS Koordinaten erfolgt.

12. Verfahren nach einem der Ansprüche 7 bis 11, des Weiteren umfassend Erzeugen von Daten umfassend die Ablageposition des Saatgutkorns (8) und/oder eine Abweichung der Ablageposition des Saatgutkorns (8) von einer Sollposition.

13. Verfahren nach einem der Ansprüche 8 bis 12, des Weiteren umfassend Übertragen des Bildes bzw. der Bilder und/oder mindestens eines Teils der Daten an eine Ausgabeeinrichtung (15, 16) und/oder eine Speichereinrichtung (17).

14. Verfahren nach einem der Ansprüche 8 bis 13, des Weiteren umfassend Ausgeben des Bildes bzw. der Bilder und/oder einer Visualisierung mindestens eines Teils Daten und/oder eines Signals, das basierend auf mindestens einem Teil der Daten erzeugt wird.

15. Verfahren nach einem der Ansprüche 7 bis 14, des Weiteren umfassend Vergleichen der Abweichung der Ablageposition des Saatgutkorns (8) von einer Sollposition mit einem vorgegebenen Wert, Erzeugen, und insbesondere Ausgeben und/oder Speichern, eines Warnsignals, wenn die Abweichung größer ist als der vorgegebene Wert.
